# EUROPEAN PATENT SPECIFICATION

(11) **EP 2 990 710 B1**
(45) Date of publication and mention of the grant of the patent: **22.03.2023**
(21) Application number: 14461564.8
(22) Date of filing: 28.08.2014
(51) Int. Cl.: F16L 47/22

(54) **DUCTING APPARATUS**
FÜHRUNG APPARAT
CONDUIT

(43) Date of publication of application: 02.03.2016
(73) Proprietor: UTC Aerospace Systems Wroclaw Sp. z o.o., 51-317 Wroclaw (PL)
(72) Inventor: Kret, Slawomir, 67-320 Malomice (PL)
(74) Representative: Dehns

(56) References cited:
- EP-A1- 1 741 968
- WO-A1-00/39495
- GB-A- 2 319 316

## Description

The present disclosure generally relates to ducting apparatus and methods, and more specifically a ducting apparatus comprising a duct and a reinforcing member located at an end of the duct to oppose compressive forces that are applied to the duct.

### BACKGROUND

Fluid ducting, for example air ducting, is frequently required to be fluidly connected. A conventional method of connecting two ducts together is known as "channel band coupling". In a channel band coupling, a seal is compressed against a common connecting portion of two ducts so as to prevent leakage of fluids at the connecting portion. A fastening mechanism, for example a gasket in the form of a circular clamp, may be used to tighten the seal around the connecting portion.

In some situations it is necessary to provide a reinforcing ring within the duct, for example if the duct is made of a relatively weak material. The reinforcing ring opposes the fastening mechanism and ensures that the seal can be adequately compressed as described above.

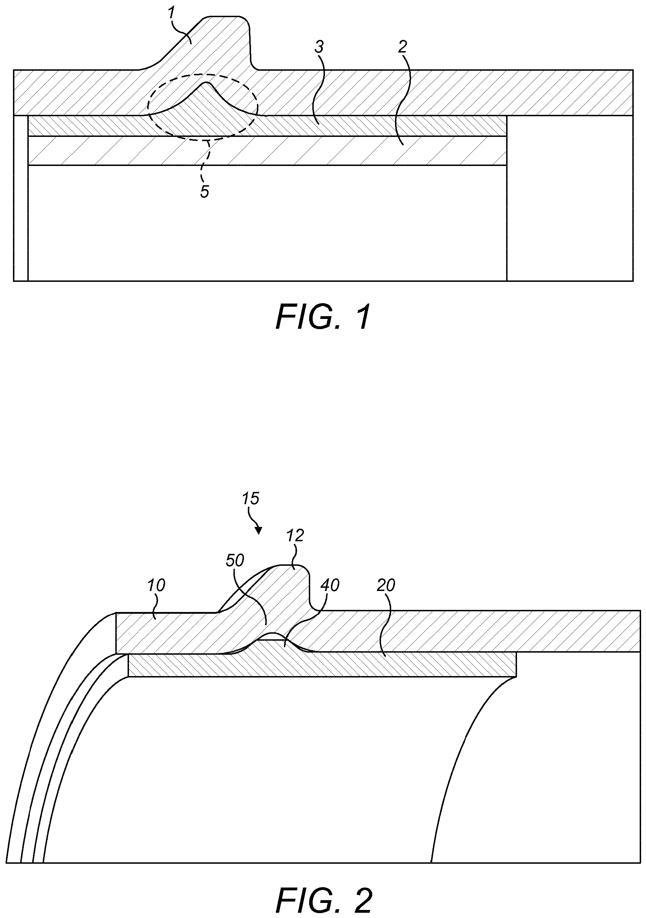

A conventional method of securing the reinforcing ring to the inside of the duct is shown in Fig. 1. In the conventional method, an adhesive 3 is placed between the duct 1 and the reinforcing ring 2 to secure the two components together. During manufacturing of ducts, for example by suction blow molding processes, the material may shrink back to form an inner cavity 5 around the internal periphery of the duct 1. In the conventional method, the adhesive 3 extends into this inner cavity 5.

WO 00/39495 discloses a pipe coupling, and EP 1741968 A1 discloses a clamping ring.

It is desired to improve the method of connecting the reinforcing ring to the duct.

### SUMMARY

In accordance with an aspect of the present disclosure, there is provided a ducting apparatus as claimed in claim 1.

The connection of the reinforcing ring to the duct is improved by securing the reinforcing ring to the duct using cooperation of an inner cavity in the duct and one or more protrusions on the reinforcing ring. This means that no adhesive is required to hold the reinforcing ring in place, which reduces the internal diameter of the duct end portion. Lack of an adhesive layer (see Fig. 1) allows greater internal diameter of reinforcing ring. It has been found that the end portion of a duct is also improved when using the present connecting method since the internal diameter of the duct end portion is increased. This reduces the pressure drop across the end portion of the duct. Moreover, manufacturing is simplified since it does not require a bonding process.

It will be appreciated that the disclosed apparatus optionally utilises the inner cavity of the duct that may be formed during manufacture thereof, for example by a blow molding technique, in order to secure and position the reinforcing ring.

The ducting apparatus may be an aircraft ducting apparatus, or may be for use in an aircraft or aerospace environment.

The one or more protrusions may comprise a circumferential bead extending around the periphery of the reinforcing member.

The one or more protrusions may extend into the inner cavity of the duct so as to restrict axial movement of the reinforcing member relative to the duct and/or the ducting assembly.

A press fit may exist between the duct and the reinforcing member.

The protrusion may have the same, comparable or slightly reduced dimensions as the inner cavity of the duct. The protrusion, for example one or more side edges of the protrusion, may abut the walls of the inner cavity.

The duct may comprise a composite and/or plastic material.

The duct and/or the reinforcing member may comprise a cylindrical ring.

An outer diameter of the reinforcing member may be substantially the same as an inner diameter of the duct.

There may be no adhesive present between the duct and the reinforcing member. The duct and the reinforcing member may not be bonded to one another.

The duct may be a first duct and the duct end may be a first duct end, and the ducting apparatus may further comprise a second duct optionally having a second duct end that is fluidly connected to the first duct end.

The reinforcing member may be a first reinforcing member, the second duct may comprise a second inner cavity proximate an end thereof, and the ducting apparatus may further comprise:
a second reinforcing member located within the second duct end, optionally comprising one or more protrusions extending into the second inner cavity of the second duct so as to restrict relative movement between the second duct and the second reinforcing member.

The first and second reinforcing members may be part of a common reinforcing member that is optionally located within both first and second duct ends.

The ducting apparatus may further comprise a sealing member surrounding at least a portion of each of the first duct end and the second duct end, wherein optionally the sealing member fluidly seals the connection between the first duct end and the second duct end.

According to an aspect of the present disclosure, there is provided a method as claimed in claim 10.

The method may further comprise forming the duct using a blow molding process, for example a suction blow molding process. The inner cavity may be formed due to shrinking of said duct, duct end, duct material or duct end material. The inner cavity may be formed during or after said blow molding process.

The ducting apparatus according to any of the aspects and embodiments disclosed herein may be referred to as, or be in the form of, a coupling mechanism or a channel band coupling.

### BRIEF DESCRIPTION OF THE DRAWINGS

Various embodiments will now be described, by way of example only, and with reference to the accompanying drawings in which:
Fig. 1 shows a prior art ducting apparatus;
Fig. 2 shows a ducting apparatus according to the invention.

### DETAILED DESCRIPTION

A ducting apparatus in the form of a channel band coupling (not shown) is provided to fluidly connect two ducts. Each duct has a respective duct end and these are situated in close proximity, or connected to one another. A seal is located around and spans across both the duct ends to fluidly seal the connection between the ducts. The seal is compressed against the duct ends using a fastening mechanism, for example a gasket in the form of a circular clamp. The ducts are made from a composite material or plastic and can be liable to collapse if provided without any reinforcement, due to the compression force exerted on the ducts by the fastening mechanism.

Referring now to Fig. 2, in order to oppose this compression force and provide reinforcement a reinforcing ring 20 is provided in each duct 10 proximate the duct end 15. The reinforcing ring 20 is made of a relatively strong material, for example a metallic material, that can adequately oppose the compression force exerted by the fastening mechanism. This prevents the duct end 15 and duct 10 from collapsing when subject to a compressive force.

The reinforcing ring 20 has an outer diameter that is substantially the same as the inner diameter of the duct 10 at duct end 15. Thus, it fits within the duct end 15 in a press fit arrangement between the duct 10 and the reinforcing ring 20.

The duct 10 is manufactured such that the duct end 15 comprises a bead 12, for example using a suction blow molding technique. A side effect of the manufacturing method is that a portion of the internal material of the duct 10 shrinks back to produce an inner cavity 50. The inner cavity 50 is typically in the form of a peripheral cavity, void or notch around the inner circumference of the duct end 15.

The reinforcing ring 20 is provided with a circumferential protrusion or bead 40, that is configured to be located within the inner cavity 50 of the duct 10. The dimensions of the protrusion 40 are comparable to or slightly smaller than the dimensions of the inner cavity 50, such that the protrusion 40 fits within the inner cavity 50 but is restricted from axial movement by abutment of the protrusion 40 with the walls of the inner cavity 50. The restriction of axial movement of the protrusion 40 restricts axial movement of the reinforcing ring 20. This prevents undesired relative movement between the reinforcing ring 20 and the duct 10.

It will be appreciated that the ducting apparatus disclosed herewith does not require the use of an adhesive layer. Instead, the reinforcing ring 20 is held and secured within the duct 10 using a press fit arrangement and/or the engagement of the protrusions 40 with the inner cavity 50. The reinforcing ring 20 may be substantially prevented from axial movement relative to the duct 10 by the one or more protrusions 40, which fit into the inner cavity 50 formed in the interior surface of the duct end 15 during manufacture.

In order to manufacture or assemble the ducting apparatus according to an embodiment, the duct 10 is manufactured with a beaded end using a suction blow molding technique. This forms an inner cavity 50 in the interior surface of the duct end 15. The reinforcing ring 20 is then pressed into the duct end 15 until the protrusion 40 comes into alignment with the inner cavity 50. Once this occurs the protrusion 40 slips into the inner cavity 50. The protrusion 40 abuts the sides of the inner cavity 50 so as to prevent axial movement of the reinforcing ring 20 relative to the duct 10.

This method of manufacture or assembly is advantageous over conventional methods that use adhesive. For example, no bonding process is required and there is also a reduction in materials.

Although the present disclosure has been described with reference to the embodiments described above, it will be understood by those skilled in the art that various changes in form and detail may be made without departing from the scope of the accompanying claims.

## Claims

1. A ducting apparatus comprising:
a duct (10) comprising an inner cavity (50) proximate an end (15) thereof, wherein the duct (10) is manufactured such that the duct end (15) comprises a bead (12) and the inner cavity (50), the inner cavity (50) being a peripheral cavity, void or notch around an inner circumference of the duct end (15); and
a reinforcing ring (20) located within said duct end (15) comprising one or more protrusions (40) extending into said inner cavity (50) of said duct (10) so as to restrict relative movement between said duct (10) and said reinforcing ring (20),
wherein said duct (10) is a first duct and said duct end (15) is a first duct end, and said ducting apparatus further comprises a second duct having a second duct end that is fluidly connected to said first duct end,
wherein said reinforcing ring (20) is a first reinforcing ring, said second duct comprises a second inner cavity proximate an end thereof, and said ducting apparatus further comprises a second reinforcing ring located within said second duct end comprising one or more protrusions extending into said second inner cavity of said second duct so as to restrict relative movement between said second duct and said second reinforcing ring,
wherein the ducting apparatus further comprises:
a sealing ring surrounding at least a portion of each of said first duct end and said second duct end, wherein said sealing ring fluidly seals said connection between said first duct end and said second duct end; and
a fastening mechanism configured to compress said sealing ring against the first and second duct ends,
wherein said first and second reinforcing rings oppose the compression force exerted by said fastening mechanism.

2. A ducting apparatus as claimed in claim 1, wherein said one or more protrusions (40) comprises a circumferential bead extending around the periphery of said reinforcing ring (20).

3. A ducting apparatus as claimed in claim 1 or 2, wherein said one or more protrusions (40) extend into said inner cavity (50) of said duct (10) so as to restrict axial movement of said reinforcing ring (20) relative to said duct (10).

4. A ducting apparatus as claimed in claim 1, 2 or 3, wherein a press fit exists between said duct (10) and said reinforcing ring (20).

5. A ducting apparatus as claimed in any preceding claim, wherein said duct (10) comprises a composite and/or plastic material.

6. A ducting apparatus as claimed in any preceding claim, wherein said duct (10) and/or said reinforcing ring (20) comprises a cylindrical ring.

7. A ducting apparatus as claimed in any preceding claim, wherein an outer diameter of said reinforcing ring (20) is substantially the same as an inner diameter of said duct (10).

8. A ducting apparatus as claimed in any preceding claim, wherein no adhesive is present between said duct (10) and said reinforcing ring (20).

9. A ducting apparatus as claimed in any preceding claim, wherein said duct (10) and said reinforcing ring (20) are not bonded to one another.

10. A method of connecting two ducts (10) and reinforcing their ends (15), comprising:
providing a ducting apparatus as claimed in any preceding claim; and
locating the first and second reinforcing rings (20) within said duct ends (15) such that said one or more protrusions (40) extend into said respective first and second inner cavities (50) of said first and second ducts (10) so as to restrict relative movement between said first and second ducts (10) and said reinforcing rings (20).

11. A method as claimed in claim 10, further comprising forming said first duct (10) using a blow molding process.

12. A method as claimed in claim 11, wherein said first inner cavity (50) is formed due to shrinking of said first duct end (15) during or after said blow molding process.

## Patentansprüche

1. Leitungsvorrichtung, umfassend:
eine Leitung (10), die einen Innenhohlraum (50) nahe einem Ende (15) davon umfasst, wobei die Leitung (10) derart hergestellt ist, dass das (15) einen Wulst (12) und den Innenhohlraum (50) umfasst, wobei der Innenhohlraum (50) ein umlaufender Hohlraum, ein Leerraum oder eine Kerbe um einen Innenumfang des Führungsendes (15) ist; und
einen Verstärkungsring (20), der sich innerhalb des Führungsendes (15) befindet und einen oder mehrere Vorsprünge (40) umfasst, die sich in den Innenhohlraum (50) der Leitung (10) erstrecken, um eine Relativbewegung zwischen der Leitung (10) und dem Verstärkungsring (20) einzuschränken,
wobei die Leitung (10) eine erste Leitung ist, und das Führungsende (15) ein erstes Führungsende ist, und der Leitungsvorrichtung ferner ein zweites Führungsende aufweist, das mit dem ersten Führungsende in fluidisch verbunden ist,
wobei der Verstärkungsring (20) ein erster Verstärkungsring ist, die zweite Leitung einen zweiten Innenhohlraum nahe einem Ende davon umfasst, und der Leitungsvorrichtung ferner einen zweiten Verstärkungsring umfasst, der sich innerhalb des zweiten Führungsendes befindet, das einen oder mehrere Vorsprünge umfasst, die sich in den zweiten Innenhohlraum der zweiten Leitung erstrecken, um Relativbewegung zwischen der zweiten Leitung und dem zweiten Verstärkungsring einzuschränken,
wobei der Leitungsvorrichtung ferner Folgendes umfasst:
einen Dichtring, der mindestens einen Abschnitt sowohl des ersten Führungsendes als auch des zweiten Führungsendes umgibt, wobei der Dichtring die Verbindung zwischen dem ersten Führungsende und dem zweiten Führungsende fluidisch abdichtet; und
einen Befestigungsmechanismus, der dazu konfiguriert ist, den Dichtring gegen das erste und das zweite Führungsende zu drücken,
wobei der erste und der zweite Verstärkungsring der Kompressionskraft, die von dem Befestigungsmechanismus ausgeübt wird, entgegenwirken.

2. Leitungsvorrichtung nach Anspruch 1, wobei der eine oder die mehreren Vorsprünge (40) einen umlaufenden Wulst umfassen, der sich um den Umfang des Verstärkungsrings (20) erstreckt.

3. Leitungsvorrichtung nach Anspruch 1 oder 2, wobei sich der eine oder die mehreren Vorsprünge (40) in den Innenhohlraum (50) der Leitung (10) erstrecken, um die axiale Bewegung des Verstärkungsrings (20) relativ zu dieser Leitung (10) einzuschränken.

4. Leitungsvorrichtung nach Anspruch 1, 2 oder 3, wobei zwischen der Leitung (10) und dem Verstärkungsring (20) eine Presspassung besteht.

5. Leitungsvorrichtung nach einem vorstehenden Anspruch, wobei die Leitung (10) ein Verbundmaterial und/oder Kunststoffmaterial umfasst.

6. Leitungsvorrichtung nach einem vorstehenden Anspruch, wobei die Leitung (10) und/oder der Verstärkungsring (20) einen zylindrischen Ring umfasst/umfassen.

7. Leitungsvorrichtung nach einem vorstehenden Anspruch, wobei ein Außendurchmesser des Verstärkungsrings (20) im Wesentlichen gleich einem Innendurchmesser der Leitung (10) ist.

8. Leitungsvorrichtung nach einem vorstehenden Anspruch, wobei zwischen der Leitung (10) und dem Verstärkungsring (20) kein Klebstoff vorhanden ist.

9. Leitungsvorrichtung nach einem vorstehenden Anspruch, wobei die Leitung (10) und der Verstärkungsring (20) nicht aneinander geklebt sind.

10. Verfahren zum Verbinden zweier Führungen (10) und zum Verstärken ihrer Enden (15), umfassend:
Bereitstellen eines Leitungsvorrichtungs nach einem vorstehenden Anspruch; und
Anordnen des ersten und des zweiten Verstärkungsrings (20) innerhalb der Führungsenden (15) derart, dass sich der eine oder die mehreren Vorsprünge (40) in den jeweiligen ersten und zweiten Innenhohlraum (50) der ersten und der zweiten Leitung (10) erstrecken, um Relativbewegung zwischen der ersten und der zweiten Leitung (10) und den Verstärkungsringen (20) einzuschränken.

11. Verfahren nach Anspruch 10, das ferner das Bilden der ersten Leitung (10) unter Verwenden eines Blasformverfahrens umfasst.

12. Verfahren nach Anspruch 11, wobei der erste Innenhohlraum (50) aufgrund von Schrumpfen des ersten Führungsendes (15) während oder nach dem Blasformverfahren gebildet wird.

## Revendications

1. Appareil de canalisation comprenant :
un conduit (10) comprenant une cavité intérieure (50) à proximité d'une extrémité (15) de celui-ci, dans lequel le conduit (10) est fabriqué de sorte que l'extrémité de conduit (15) comprend un bourrelet (12) et la cavité intérieure (50), la cavité intérieure (50) étant une cavité périphérique, un vide ou une encoche autour d'une circonférence intérieure de l'extrémité de conduit (15) ; et
un anneau de renforcement (20) situé à l'intérieur de ladite extrémité de conduit (15) comprenant une ou plusieurs protubérances (40) s'étendant dans ladite cavité intérieure (50) dudit conduit (10) de manière à restreindre le mouvement relatif entre ledit conduit (10) et ledit anneau de renforcement (20), dans lequel ledit conduit (10) est un premier conduit et ladite extrémité de conduit (15) est une première extrémité de conduit, et ledit appareil de canalisation comprend en outre un second conduit ayant une seconde extrémité de conduit qui est reliée fluidiquement à ladite première extrémité de conduit,
dans lequel ledit anneau de renforcement (20) est un premier anneau de renforcement, ledit second conduit comprend une seconde cavité intérieure à proximité d'une extrémité de celui-ci, et ledit appareil de canalisation comprend en outre un second anneau de renforcement situé à l'intérieur de ladite seconde extrémité de conduit comprenant une ou plusieurs protubérances s'étendant dans ladite seconde cavité intérieure dudit second conduit de manière à restreindre le mouvement relatif entre ledit second conduit et ledit second anneau de renforcement,
dans lequel l'appareil de canalisation comprend en outre :
un anneau d'étanchéité entourant au moins une partie de chacune de ladite première extrémité de conduit et de ladite seconde extrémité de conduit, dans lequel ledit anneau d'étanchéité scelle de manière fluidique ladite liaison entre ladite première extrémité de conduit et ladite seconde extrémité de conduit ; et
un mécanisme de fixation configuré pour comprimer ledit anneau d'étanchéité contre les première et seconde extrémités de conduit,
dans lequel lesdits premier et second anneaux de renforcement s'opposent à la force de compression exercée par ledit mécanisme de fixation.

2. Appareil de canalisation selon la revendication 1, dans lequel lesdites une ou plusieurs protubérances (40) comprennent un bourrelet circonférentiel s'étendant autour de la périphérie dudit anneau de renforcement (20).

3. Appareil de canalisation selon la revendication 1 ou 2, dans lequel lesdites une ou plusieurs protubérances (40) s'étendent dans ladite cavité intérieure (50) dudit conduit (10) de manière à restreindre le mouvement axial dudit anneau de renforcement (20) par rapport audit conduit (10).

4. Appareil de canalisation selon la revendication 1, 2 ou 3, dans lequel un ajustement serré existe entre ledit conduit (10) et ledit anneau de renforcement (20).

5. Appareil de canalisation selon une quelconque revendication précédente, dans lequel ledit conduit (10) comprend un matériau composite et/ou plastique.

6. Appareil de canalisation selon une quelconque revendication précédente, dans lequel ledit conduit (10) et/ou ledit anneau de renforcement (20) comprend un anneau cylindrique.

7. Appareil de canalisation selon une quelconque revendication précédente, dans lequel un diamètre extérieur dudit anneau de renforcement (20) est sensiblement le même qu'un diamètre intérieur dudit conduit (10).

8. Appareil de canalisation selon une quelconque revendication précédente, dans lequel aucun adhésif n'est présent entre ledit conduit (10) et ledit anneau de renforcement (20).

9. Appareil de canalisation selon une quelconque revendication précédente, dans lequel ledit conduit (10) et ledit anneau de renforcement (20) ne sont pas collés l'un à l'autre.

10. Procédé de liaison de deux conduits (10) et de renforcement de leurs extrémités (15), comprenant :
la fourniture d'un appareil de canalisation selon une quelconque revendication précédente ; et
le positionnement des premier et second anneaux de renforcement (20) à l'intérieur desdites extrémités de conduit (15) de sorte que lesdites une ou plusieurs protubérances (40) s'étendent dans lesdites première et seconde cavités intérieures (50) respectives desdits premier et second conduits (10) de manière à restreindre le mouvement relatif entre lesdits premier et second conduits (10) et lesdits anneaux de renforcement (20).

11. Procédé selon la revendication 10, comprenant en outre la formation dudit premier conduit (10) en utilisant un processus de moulage par soufflage.

12. Procédé selon la revendication 11, dans lequel ladite première cavité intérieure (50) est formée en raison du rétrécissement de ladite première extrémité de conduit (15) pendant ou après ledit processus de moulage par soufflage.
